# EUROPÄISCHE PATENTSCHRIFT

(11) **EP 0 741 248 B1**
(45) Veröffentlichungstag und Bekanntmachung des Hinweises auf die Patenterteilung: **19.12.2001**
(21) Anmeldenummer: 96106192.6
(22) Anmeldetag: 19.04.1996
(51) Int. Cl.: F15C 3/14, F16K 1/20, F16K 31/06, F16K 31/08

(54) **Fluidisches Steuerelement**
Fluidic control element
Elément de commande fluidique

(30) Priorität: 03.05.1995 DE 29507380 U
(43) Veröffentlichungstag der Anmeldung: 06.11.1996
(73) Patentinhaber: Bürkert Werke GmbH & Co., D-74653 Ingelfingen (DE)
(72) Erfinder: Pieloth, Manfred, 01069 Dresden (DE); Töpfer, Heinz Dr. Prof., 01277 Dresden (DE); Schrepel, Dieter Dr., 01468 Friedewald (DE)
(74) Vertreter: Degwert, Hartmut, Dipl.-Phys.

(56) Entgegenhaltungen:
- DE-B- 1 037 225
- DE-B- 1 247 793
- DE-B- 2 530 362
- US-A- 4 333 390
- US-A- 4 765 370
- US-A- 5 040 567

## Beschreibung

Die Erfindung betrifft ein fluidisches Steuerelement mit einem Gehäuse, einem in dem Gehäuse gebildeten Steuerraum, in den wenigstens zwei Strömungskanäle münden, wenigstens einem im Steuerraum angeordneten und einem der Strömungskanäle zugeordneten Dichtsitz und einer in den Steuerraum hineinragenden, mit elastischem Material umgebenen Zunge, die zwischen einer Schließstellung, in der sie den Dichtsitz abdeckt, sowie einer Öffnungsstellung, in der sie den Dichtsitz freigibt, geweglich ist, wobei die Zunge einen Arm eines zweiarmigen Hebels bildet, der schwenkbar in einer im Gehäuse eingespannten, den Hebel eng umschließenden Umhüllung aus dem elastischen Material gelagert ist und dessen zweiter Arm als Betätigungsarm aus dem Steuerraum herausragt. Ein solches fluidisches Steuerelement ist in der US 4 765 370 gezeigt.

Ähnliche fluidische Steuerelemente sind bereits aus der DE-AS 10 37 225 und der DE 25 30 362 C2 bekannt. Den aus diesen beiden Druckschriften bekannten Steuerelementen ist gemeinsam, daß die Zunge durch zwei Kippgelenke, die durch das die Zunge umgebende elastische Material gebildet sind, am Gehäuse befestigt ist. Nachteilig an den bekannten Steuerelementen ist, daß ein hoher Druck im Steuerraum die Stellung der Zunge ungewünscht beeinflussen kann. Damit ist auch die Beweglichkeit der Zunge und der von den Lagern entgegengebrachte Widerstand zur Verstellung der Zunge abhängig vom Druck im Steuerraum. Zusätzlich hat der auf diejenigen Seiten der Lager einwirkende Druck einen Einfluß auf die Beweglichkeit der Zunge und den Verstellwiderstand, die nicht zum Steuerraum angrenzen.

Aus der DE-PS 12 47 793 ist ferner ein fluidisches Steuerelement bekannt, bei dem die in den Steuerraum hineinragende Zunge starr mit dem Klappanker eines Elektromagnetantriebs verbunden ist. Der Elektromagnetantrieb ist von dem Steuerraum durch eine Membran getrennt, die mit einer Tasche zur Aufnahme der Zunge versehen ist. Die Zunge wird zwischen zwei einander gegenüberliegenden Ventilsitzen bewegt, die sie abwechselnd freigibt und verschließt. Die an ihrem Umfangsrand eingespannte Membran weist einen trichterförmigen Übergangsbereich zu der Tasche auf, in der die Zunge steckt, um deren Auslenkung nur wenig Widerstand entgegenzusetzen. In diesem Übergangsbereich ist die Membran jedoch nicht abgestützt und kann daher keinen hohen Druckdifferenzen standhalten. Überdies wird sie hoch beansprucht, da sie abwechselnd gedehnt und gestaucht wird.

Aufgabe der Erfindung ist es, ein fluidisches Steuerelement zu schaffen, dessen Zunge als Teil eines zweiarmigen Hebels unabhängig vom Druck im Steuerraum bewegt werden kann und dessen Beweglichkeit nicht vom Druck im Steuerraum abhängt.

Diese Aufgabe wird bei einem Steuerelement der eingangs angegebenen Art dadurch gelöst, daß zur Lagerung des Hebels zwei Lager vorgesehen sind, die als quer zur Längsrichtung des Hebels in entgegengesetzten Gehäusewänden gegenüberliegend angeordnete Drehgelenke ausgebildet sind, wobei der Hebel einen quer zu seiner Längsrichtung angeordneten Lagerarm aufweist, dessen äußere, gleichsfalls von der Umhüllung eng umschlossenen Enden in den durch ihre Umhüllung gebildeten Drehgelenken im Gehäuse gelagert sind. Durch diesen völlig aymmetrischen Aufbau einerseits und durch die Verwendung von Drehgelenken andererseits kommt es zu keiner Verlagerung der Zunge bei höheren Drücken im Steuerraum. Die auf die Drehgelenke einwirkenden axialen Kräfte heben sich dadurch gegenseitig auf. Ein weiterer Vorteil bei Verwendung von DRehgelenken besteht darin, daß diese üblichlerweise eine längere Lebensdauer als die sehr stark auf Zug belasteten Kippgelenke besitzen. In deren stark auf Zug belasteten Bereichen können sehr schnell Risse im elastischen Material auftreten, die später zu Undichtigkeiten führen können.

Durch die Erfindung wird ein fluidisches Steuerelement zur Verfügung gestellt, bei dem die Abdichtung des Steuerraums zur Antriebsseite hin durch die Bewegung der Zunge nur wenig verformt wird und hohen Druckdifferenzen zwischen Steuerraum und Antriebsseite standhält. Da die Schenkachse des zweiarmigen Hebels an der Schnittstelle zwischen Steuerraum und Antriebsseite liegt, ist die Auslenkung des Hebels in diesem Bereich sehr klein. Entsprechend gering ist die Verformung der elastischen Umhüllung, die zugleich als Abdichtung und als Lagerelement dient.

Die Lagerung des zweiarmigen Hebels mit einem quer zu seiner Längsrichtung angeordneten Lagerarm zeichnet sich sowohl durch große Nachgiebigkeit aus, so daß die Antriebskräfte geringgehalten werden können, als auch durch eine genaue Definition der Schwenkachse, so daß eine Taumelbewegung der Zunge trotz ihrer Lagerung in elastisch nachgiebigem Material weitgehend vermieden wird.

Gemäß einer bevorzugten Ausführungsform verfügt die Umhüllung im Bereich der Drehgelenke über eine gute Abstützung, da sie zwischen den Gehäuseteilen eingespannt ist. Die als Drehgelenk und zugleich als Abdichtung fungierende Umhüllung hält daher auch sehr hohen Druckdifferenzen zwischen Steuerraum und Antriebsseite stand.

Bei der erfindungsgemäßen Aubildung des Steuerelements ist der zweiarmige Hebel mit einem quer zu seiner Längsrichtung angeordneten Lagerarm versehen. Diese Art der Lagerung zeichnet sich sowohl durch große Nachgiebigkeit aus, so daß die Antriebskräfte geringgehalten werden können, als auch durch eine genaue Definition der Schwenkachse, so daß eine Taumelbewegung der Zunge trotz ihrer Lagerung in elastisch nachgiebigem Material weitgehend vermieden wird.

Die in den Drehgelenken aufgenommenen Enden haben vorteilhafterweise ein rechteckiges Querschnittsprofil. Bei einem runden Querschnittsprofil besteht der Nachteil, daß die entsprechenden Enden in die Drehgelenke eingeklebt werden müssen, um bei einer Schwenkbewegung nicht im Drehgelenk zu gleiten. Enden mit einem rechteckigen Querschnittsprofil hingegen erfordern nur ein Einpressen der Enden in die entsprechenden Öffnungen in den Drehgelenken.

Bei der bevorzugten Ausführungsform besteht das Gehäuse aus zwei flachen, zumindest annähernd gleichen, entlang einer Trennebene aneinandergefügten Gehäuseteilen, die einfach und kostengünstig hergestellt werden können. Ferner wird der zweiarmige Hebel mit Zunge und Betätigungsarm einteilig mit der Umhüllung sowie einem den Steuerraum umschließenden Dichtrahmen ausgebildet, vorzugsweise indem die Umhüllung eine Umspritzung des Hebels aus Elastomermaterial bildet, an die der Dichtrahmen angeformt ist. Das Steuerelement besteht somit lediglich aus drei Teilen: zwei gleichen Gehäuseteilen und dem kombinierten Steuer/Dichtelement, das einfach zwischen die zwei Gehäuseteile gelegt wird, die dann miteinander verspannt werden.

Die für die Betätigung der Zunge erforderlichen Antriebskräfte werden bei einer weiteren vorteilhaften Ausführungsform durch eine fluidische Rückkopplung erheblich reduziert. Diese Rückkopplung wird dadurch erreicht, daß der Hebel zwischen seinen Drehgelenken und dem Betätigungsarm einen Abschnitt aufweist, der in einem im Gehäuse gebildeten Druckraum eingeschlossen ist; dieser Druckraum ist in zwei durch die Umhüllung des Hebels gegeneinander abgedichtete Druckkammern geteilt; die jeweils einem Dichtsitz zugeordneten Strömungskanäle sind mit der auf derselben Seite gelegenen Druckkammer verbunden. Die der jeweiligen Druckkammer zugewandte Fläche des Hebelabschnitts wird somit durch einen Druck beaufschlagt, der bestrebt ist, die Zunge gegen den auf derselben Seite gelegenen Dichtsitz anzudrücken. Entsprechend geringer sind die am Betätigungsarm aufzubringenden Antriebskräfte.

Weitere Merkmale und Vorteile der Erfindung ergeben sich aus der folgenden Beschreibung und aus der beigefügten Zeichnung, auf die Bezug genommen wird. In der Zeichnung zeigen:
- Fig. 1: einen Schnitt einer ersten Ausführungsform des fluidischen Steuerelements entlang der Linie I-I in Fig. 2;
- Fig. 2: einen Schnitt dieses Steuerelements entlang Linie II-II in Fig. 1;

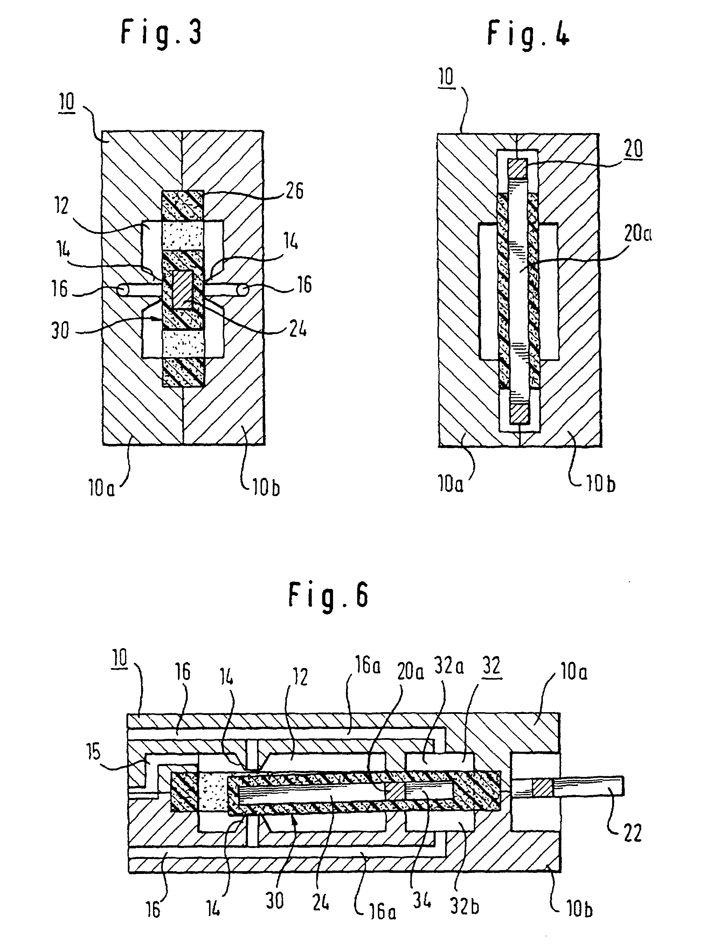

- Fig. 3: einen Schnitt des Steuerelements entlang Linie III-III in Fig. 2;
- Fig. 4: einen Schnitt des Steuerelements entlang Linie IV-IV in Fig. 2;
- Fig. 5: eine Perspektivansicht eines kombinierten Steuer-Dichtelements für die in den Figuren 1 bis 4 gezeigte Ausführungsform;
- Fig. 6: eine Schnittansicht analog der Fig. 1, jedoch bei einer bevorzugten Ausführungsform des Steuerelements; und
- Fig. 7 bis 12: schematisch verschiedene Ausführungen von Antrieben, mit denen das Steuerelement gekoppelt werden kann.

Das fluidische Steuerelement weist ein allgemein quaderförmiges Gehäuse 10 auf, das aus zwei nahezu gleichen Gehäuseteilen 10a, 10b zusammengesetzt ist. Zwischen den Gehäuseteilen 10a, 10b ist ein Steuerraum 12 gebildet. In den Steuerraum 12 ragen zwei einander gegenüberliegende Dichtsitze 14 hinein, von denen der eine am Gehäuseteil 10a und der andere symmetrisch am Gehäuseteil 10b gebildet ist. Von jedem Dichtsitz 14 geht ein Strömungskanal 16 aus, der abgewinkelt durch die Wandung des betreffenden Gehäuseteils 10a, 10b geführt ist und an einer Schmalseite des Gehäuses 10 mündet.

Ein weiterer Strömungskanal 15 führt aus dem Steuerraum 12 durch die Wandung des Gehäuseteils 10a und mündet an derselben Schmalseite des Gehäuses. Die beiden Gehäuseteile 10a, 10b unterscheiden sich voneinander lediglich durch den Strömungskanal 15, der nur in dem Gehäuseteil 10a ausgebildet ist.

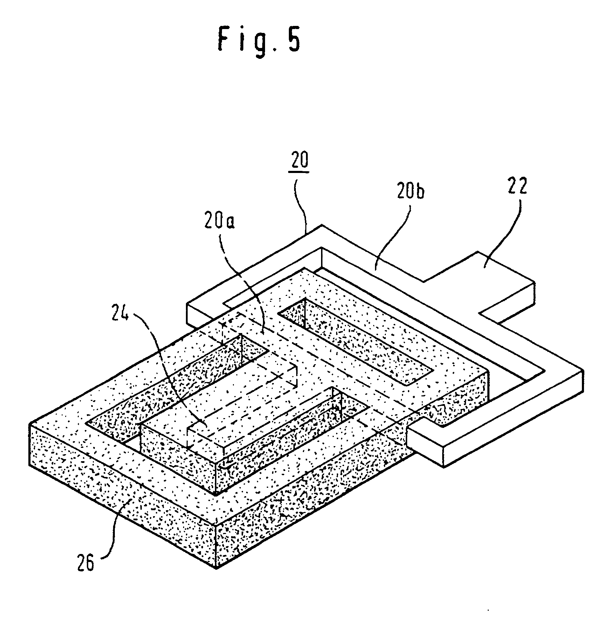

Zwischen den Gehäuseteilen 10a, 10b ist ein kombiniertes Steuer/Dichtelement eingespannt, das in Fig. 5 gesondert dargestellt ist. Es besteht aus einem starren rechteckigen Rahmen 20, an dessen eine, längere Seite ein Betätigungsarm 22 angeschlossen ist und dessen gegenüberliegende Seite einen Steuerarm 24 trägt, und aus einem Dichtrahmen 26 aus Elastomermaterial, der eine Umhüllung des Steuerarms 24 sowie einer Seite 20a des Rahmens 20 bildet. Dieses kombinierte Steuer/Dichtelement bildet einen zweiarmigen Hebel, dessen erster Arm durch den Steuerarm 24 und dessen zweiter Arm durch den Rahmen 20 sowie den Betätigungsarm 22 gebildet ist, wobei die Seite 20a des Rahmens 20 einen Lagerarm bildet, der quer zur Längsrichtung des zweiarmigen Hebels angeordnet ist. Die äußeren Enden dieses Lagerarms ragen aus dem Dichtrahmen 26 heraus. Die an diese Enden angeschlossenen, kürzeren Seiten des Rahmens 20 bilden mit der längeren Seite 20b und dem Betätigungsarm 22 einen gabelförmigen Hebelabschnitt. Der rechteckförmige Dichtrahmen 26 umgibt die Umhüllung des Steuerarms 24 mit Abstand und bildet so eine äußere Begrenzung und Abdichtung des Steuerraumes 12.

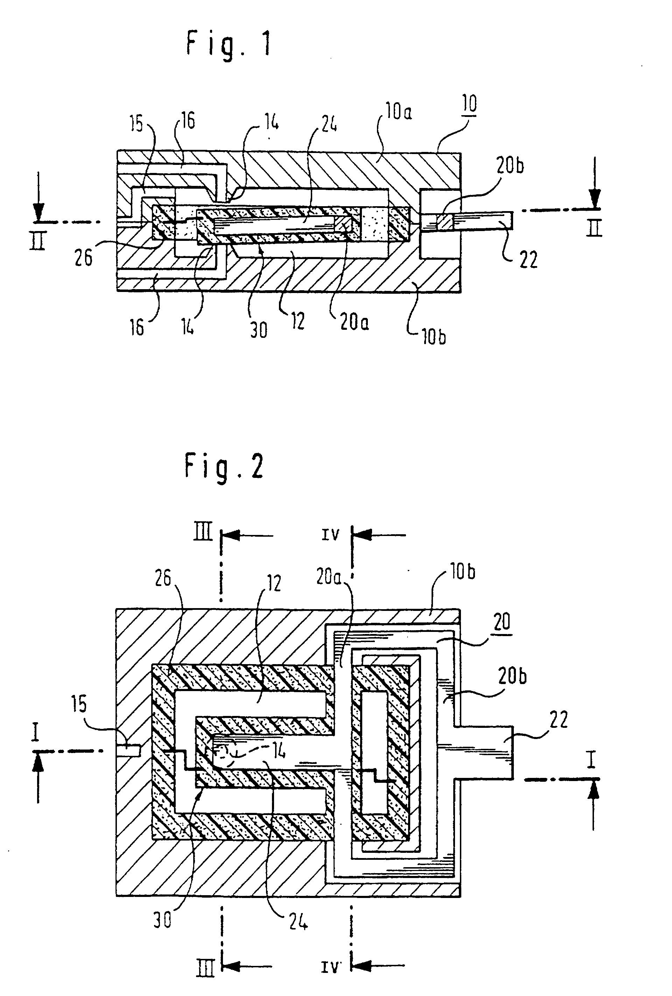

Der Lagerarm 20a ist, wie aus Fig. 4 ersichtlich, am Außenrand seiner Umhüllung zwischen den Gehäuseteilen 10a, 10b eingespannt. Die Umhüllung aus Elastomermaterial bildet zwei an gegenüberliegenden Gehäusewänden befestigte Drehgelenke für die Enden des Lagerarms 20a und somit Schwenklager für den aus Steuerarm 24, Rahmen 20 und Betätigungsarm 22 bestehenden zweiarmigen Hebel. Die Enden des Lagerarms 20a haben ein rechteckiges Querschnittsprofil. Der Steuerarm 24 mit seiner Umhüllung aus Elastomermaterial bildet eine Zunge 30, die zwischen den Dichtsitzen 14 beweglich ist, wie aus Fig. 1 ersichtlich, und gibt jeweils den einen Dichtsitz frei, während sie den anderen abdeckt. Die Betätigung der Zunge 30 erfolgt mittels des aus dem Gehäuse 10 an einer Schmalseite herausragenden Betätigungsarmes 22.

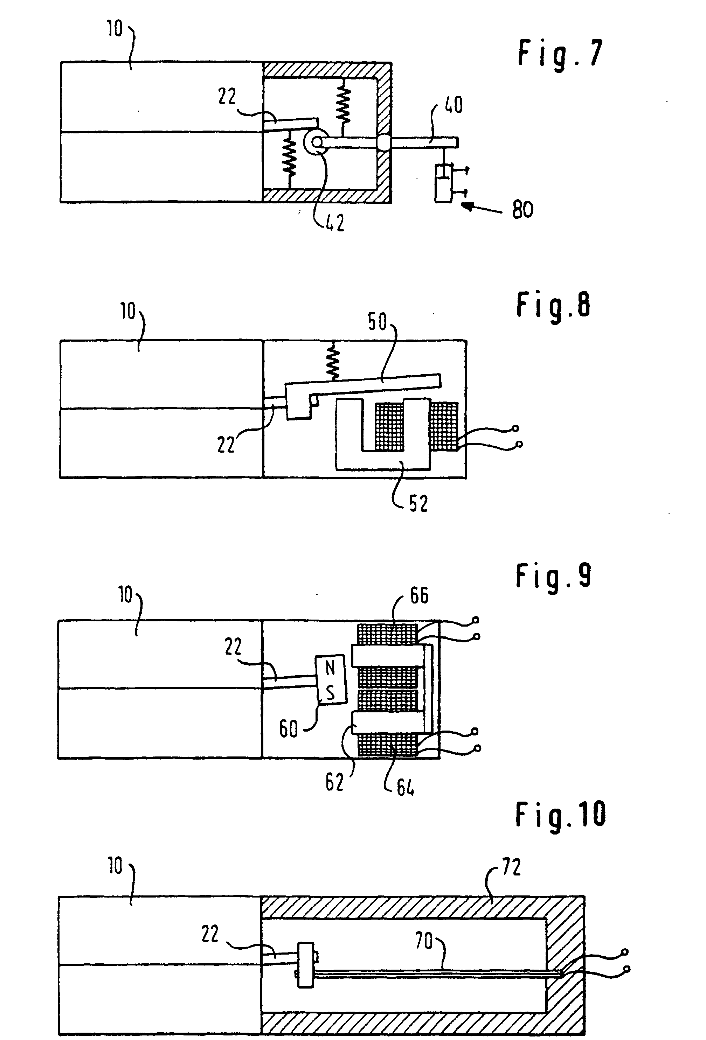

Das beschriebene fluidische Steuerelement kann zum Absperren, Weiterleiten, Drosseln, Umschalten, Mischen oder Verteilen von Fluidströmen verwendet werden. Die an der dem Betätigungsarm 22 gegenüberliegenden Schmalseite des Gehäuses 10 mündenden Strömungskanäle 15, 16 bilden vorzugsweise eine standardisierte fluidische Schnittstelle, an die andere Systemelemente mit entsprechenden Schnittstellen angekoppelt werden können. Je nach Verwendungszweck des fluidischen Steuerelements wird der Betätigungsarm 22 an unterschiedliche Antriebseinheiten angekoppelt, die ebenfalls vorzugsweise standardisiert und daher austauschbar sind. Mehrere Ausführungsformen solcher Antriebseinheiten sind beispielshalber in den Figuren 7 bis 12 dargestellt.

Bei der Ausführungsform nach Fig. 7 ist eine mechanische Betätigung mittels eines zweiarmigen, schwenkbar gelagerten Hebels 40 vorgesehen, der mittels einer Rolle 42 am Ende des Betätigungsarmes 22 angreift. Diese Anordnung bildet einen fluidischen Hand- oder Endlagenschalter, kann aber auch als Weg/Druck-Wandler Verwendung finden. Fakultativ kann der Hebel 40 oder auch direkt der Betätigungsarm 22 mit einem fluidischen Antrieb 80 mit einem Kolben und/oder einer Membran verstellt werden.

Bei der Ausführungsform nach Fig. 8 ist an den Betätigungsarm 22 ein Anker 50 eines Elektromagneten 52 angekoppelt. Diese Anordnung bildet ein monostabiles Magnetventil.

Ein bistabiles Magnetventil entsteht bei der Anordnung nach Fig. 9 durch einen an den Betätigungsarm 22 angeschlossenen Permanentmagneten 60, der vor den Polen eines Elektromagneten 62 beweglich ist, welcher zwei Wicklungen 64, 66 aufweist. Ein Stromimpuls durch die Wicklung 66 bringt den Betätigungsarm 22 in die in Fig. 9 gezeigte Lage, die im stromlosen Zustand durch den Permanentmagneten 60 erhalten bleibt; ein Stromimpuls durch die Wicklung 64 überwindet die Haltekraft des Permanentmagneten 60 und schaltet den Betätigungshebel 22 in die entgegengesetzte Lage um, die im stromlosen Zustand durch den Permanentmagneten 60 erhalten bleibt. Ein solches bistabiles Magnetventil wird auch als Impulsventil bezeichnet.

Schließlich zeigt Fig. 10 eine Ausführungsform einer Antriebseinheit, die sich durch eine besonders geringe Antriebsleistung auszeichnet. An den Betätigungsarm 22 ist das eine Ende eines langgestreckten piezoelektrischen Biegelelementes 70 angekoppelt, dessen entgegengesetztes Ende an einem Rahmen 72 fest eingespannt ist. Das Biegeelement 70 besteht aus zwei Schichten, an die jeweils eine Anschlußleitung angelegt ist. Das piezoelektrische Biegeelement 70 wirkt elektrisch als Kondensator. Beim Anlegen einer Spannung fließt nur kurzzeitig ein geringer Lade- oder Entladestrom, der schnell auf Null zurückgeht. Die Ansteuerung ist daher extrem leistungsarm. Unter der Wirkung der gespeicherten Ladung wird das Biegeelement 70 ausgelenkt und nimmt den Betätigungshebel 22 mit.

Das beschriebene fluidische Steuerelement kann auch als Proportionalventil betrieben werden. Für eine solche Verwendung wird beispielsweise bei der Ausführung nach Fig. 8 der Elektromagnet mit einem veränderlichen Strom gespeist. Der durch eine Feder in eine Endlage beaufschlagte Anker 50 wird um so stärker ausgelenkt, je größer der im Elektromagnet fließende Strom ist. Diese Anordnung kann auch als analoger elektrischpneumatischer Wandler bezeichnet werden.

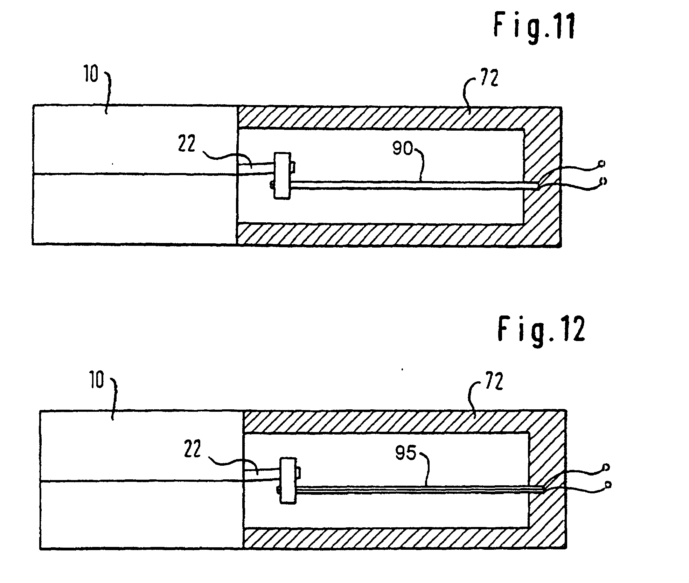

Der Betätigungsarm 22 kann zudem auch, wie in Fig. 11 dargestellt, durch ein oder mehrere Formgedächtniselemente 90 verlagert werden. Ein Formgedächtniselement 90 sorgt dafür, daß nach einer Auslenkung des Betätigungsarms 22 nach Erhitzen des Elements 90 dieser wieder exakt in seine Ursprungsstellung zurückkehrt.

Ferner ist eine Koppelung eines Bimetallantriebs 95, wie in Fig. 12 gezeigt, mit dem Betätigungsarm 22 möglich, wobei der Bimetallantrieb 95 beispielsweise mit einer entsprechenden Stromquelle verbunden sein kann, die eine Seite des Bimetallantriebs 95 entsprechend heizt, um den Betätigungsarm 22 auszulenken.

Bei der in Fig. 6 dargestellten Weiterbildung des fluidischen Steuerelements ist zwischen den Gehäuseteilen 10a, 10b ein Druckraum 32 gebildet, der durch einen zwischen Lagerarm 20a und Betätigungsarm 22 gelegenen Hebelabschnitt 34 in zwei Druckkammern 32a, 32b geteilt wird. Der Hebelabschnitt 34 ist ebenso wie der Steuerarm 24 vollständig von der Umhüllung aus Elastomermaterial umgeben. Diese Umhüllung ist zugleich die Abdichtung des Druckraumes 32 und die der Druckkammern 32a, 32b gegeneinander. Die Strömungskanäle 16 sind durch die Wandung der Gehäuseteile 10a, 10b hindurch durch Abschnitte 16a bis in die Druckkammer 32a bzw. 32b verlängert. Der Hebelabschnitt 34 ist somit durch den Differenzdruck zwischen den Druckkammern 32a, 32b beaufschlagt. Da er sich auf der Betätigungsseite des zweiarmigen Hebels befindet, erzeugt der Differenzdruck in der Druckkammer 32 eine Kraft, welche die Betätigungskraft unterstützt: Das Schaltsystem ist rückgekoppelt. Durch diese Ausführung können die an den Dichtsitzen 14 auftretenden Druckkräfte zumindest teilweise kompensiert werden.

Die Gehäuseteile 10a, 10b können aus nahezu jedem beliebigen Material kostengünstig und in großen Stückzahlen hergestellt werden. Sie können insbesondere aus Kunststoff geformt werden. Das kombinierte Steuer/Dichtelement kann aus einem Stanzteil hergestellt werden, das teilweise mit einem Elastomermaterial umspritzt wird, wobei zugleich der Dichtrahmen angeformt wird. Die Montage des Steuerelements gestaltet sich sehr einfach, da lediglich zwei Gehäuseteile unter Zwischenfügung des kombinierten Steuer/Dichtelements entlang einer Trennebene aneinanderzufügen sind.

## Patentansprüche

1. Fluidisches Steuerelement mit einem Gehäuse (10), einem in dem Gehäuse (10) gebildeten Steuerraum (12), in den wenigstens zwei Strömungskanäle (16) münden, wenigstens einem im Steuerraum (12) angeordneten und einem der Strömungskanäle zugeordneten Dichtsitz (14) und einer in den Steuerraum (12) hineinragenden, mit elastischem Material umgebenen Zunge (30), die zwischen einer Schließstellung, in der sie den Dichtsitz (14) abdeckt, sowie einer Öffnungsstellung, in der sie den Dichtsitz (14) freigibt, beweglich ist, wobei die Zunge (30) einen Arm eines zweiarmigen Hebels bildet, der schwenkbar in einer im Gehäuse (10) eingespannten, den Hebel eng umschließenden Umhüllung aus dem elastischen Material gelagert ist und dessen zweiter Arm als Betätigungsarm (22) aus dem Steuerraum (12) herausragt, **dadurch gekennzeichnet, daß** zur Lagerung des Hebels zwei Lager vorgesehen sind, die als quer zur Längsrichtung des Hebels in entgegengesetzten Gehäusewänden gegenüberliegend angeordnete Drehgelenke ausgebildet sind, wobei der Hebel einen quer zu seiner Längsrichtung angeordneten Lagerarm (20a) aufweist, dessen äußere, gleichfalls von der Umhüllung eng umschlossenen Enden in den durch ihre Umhüllung gebildeten Drehgelenken im Gehäuse gelagert sind.

2. Steuerelement nach Anspruch 1, **dadurch gekennzeichnet, daß** die Drehgelenke jeweils zwischen zwei Teilen (10a, 10b) des Gehäuses eingespannt sind.

3. Steuerelement nach Anspruch 1 oder 2, **dadurch gekennzeichnet, daß** die in den Drehgelenken aufgenommenen Enden ein rechteckiges Querschnittsprofil haben.

4. Steuerelement nach einem der vorstehenden Ansprüche, **dadurch gekennzeichnet, daß** die aus der Umhüllung seitlich herausragenden Enden des Lagerarms (20a) durch einen gabelförmigen Hebelabschnitt (20) starr mit dem Betätigungsarm (22) verbunden sind.

5. Steuerelement nach einem der vorstehenden Ansprüche, **dadurch gekennzeichnet, daß** die Umhüllung einteilig mit einem den Steuerraum (12) umschließenden Dichtrahmen (26) aus demselben elastischen Material ausgebildet und der Dichtrahmen (26) zwischen den zwei Teilen (10a, 10b) des Gehäuses (10) eingespannt ist.

6. Steuerelement nach einem der vorstehenden Ansprüche, **dadurch gekennzeichnet, daß** das Gehäuse (10) aus zwei flachen, entlang einer Trennebene aneinandergefügten Gehäuseteilen (10a, 10b) besteht.

7. Steuerelement nach Anspruch 6, **dadurch gekennzeichnet, daß** die Gehäuseteile (10a, 10b) zumindest annähernd gleich ausgebildet sind.

8. Steuerelement nach einem der vorstehenden Ansprüche, **dadurch gekennzeichnet, daß** zwei Dichtsitze (14) in dem Steuerraum einander gegenüberliegend an je einem Gehäuseteil (10a, 10b) angeordnet sind.

9. Stuerelement nach einem der vorstehenden Ansprüche, **dadurch gekennzeichnet, daß** der Hebel zwischen seinem Schwenklager und dem Betätigungsarm (22) einen Abschnitt (34) aufweist, der in einem im Gehäuse gebildeten Druckraum (32) eingeschlossen ist, daß dieser Druckraum (32) in zwei durch die Umhüllung des Hebels gegeneinander abgedichtete Druckkammern (32a, 32b) geteilt ist und daß wenigstens eine der Druckkammern mit einem der Strömungskanäle (16) verbunden ist.

10. Steuerelement nach den Ansprüchen 8 und 9, **dadurch gekennzeichnet, daß** die den Dichtsitzen (14) zugeordneten Strömungskanäle (16) jeweils mit der auf derselben Seite gelegenen Druckkammer (32a, 32b) verbunden sind.

11. Steuerelement nach einem der vorstehenden Ansrpüche, **dadurch gekennzeichnet, daß** die Umhüllung durch eine Umspritzung aus Elastomermaterial gebildet ist.

12. Steuerelement nach einem der vorstehenden Ansprüche, **dadurch gekennzeichnet, daß** das Gehäuse (10) allgemein quaderförmig ausgebildet ist und die Strömungskanäle (16) durch die Gehäusewandungen zu einer Schmalseite des Gehäuses geführt sind.

13. Steuerelement nach einem der vorstehenden Ansprüche, **dadurch gekennzeichnet, daß** der Betätigungsarm (22) wahlweise ankoppelbar ist an
- ein Handbetätigungselement (40),
- einen Elektromagnet,
- ein Antriebsteil eines Impuls-Elektromagnetantriebs,
- ein piezoelektrisches Antriebselement,
- einen Proportionalantrieb,
- einen fluidischen Antrieb (80) mit Kolben und/oder Membran,
- einen Bimetallantrieb (95),
- einen Antrieb mit Formgedächtniselementen (90).

## Claims

1. A fluid control element comprising a housing (10), a control space (12) formed in the housing (10) and into which at least two flow ducts (16) open, at least one sealing seat (14) arranged in the control space (12) and associated with one of the flow ducts, and a tongue (30) extending into the control space (12) and surrounded by an elastic material, this tongue (30) being moveable between a closed position in which it covers the sealing seat (14) and an open position in which it clears the sealing seat (14), the tongue (30) forming one arm of a two-armed lever which is pivotally mounted in a casing of elastic material clamped in the housing (10) and closely surrounding the lever, and the second arm of which extends out from the control space (12) to form an actuating arm (22), **characterized in that** two joints are provided for supporting the lever which are configured as rotary joints arranged transversely to the longitudinal direction of the lever and so as to lie opposite in opposing housing walls, the lever having a supporting arm (20a) arranged transversely to its longitudinal direction, the external ends of which, likewise closely surrounded by the casing, are supported in the housing by the rotary joints formed by their casing.

2. The control element as claimed in claim 1, **characterized in that** the rotary joints are each clamped between two parts (10a, 10b) of the housing.

3. The control element as claimed in claim 1 or 2, **characterized in that** the ends received in the rotary joints have a rectangular cross-sectional profile.

4. The control element as claimed in any of the preceding claims, **characterized in that** the ends of the supporting arm (20a) which project laterally from the casing are rigidly connected with the actuation arm (22) by means of a forked lever section (20).

5. The control element as claimed in any of the preceding claims, **characterized in that** the casing is formed from the same elastic material as and in one piece with a sealing frame (26) enclosing the control space (12), the sealing frame (26) being clamped between the two parts (10a, 10b) of the housing (10).

6. The control element as claimed in any of the preceding claims, **characterized in that** the housing (10) consists of two flat housing parts (10a, 10b) fitted together along a parting plane.

7. The control element as claimed in claim 6, **characterized in that** the housing parts (10a, 10b) are at least approximately identical in design.

8. The control element as claimed in any of the preceding claims, **characterized in that** two sealing seats (14) are arranged in the control space opposite to one another and on one housing part (10a, 10b) each.

9. The control element as claimed in any of the preceding claims, **characterized in that** the lever comprises between its pivot joint and the operating arm (22) a section (34) which is enclosed in a pressure space (32) formed in the housing, that this pressure space (32) is divided into two pressure chambers (32a, 32b) sealed off from one another by the casing of the lever, and that at least one of the pressure chambers is connected with one of the flow ducts (16).

10. The control element as claimed in claims 8 and 9, **characterized in that** the flow ducts (16) associated with the sealing seats (14) are each connected with the pressure chamber (32a, 32b) located on the same side.

11. The control element as claimed in any of the preceding claims, **characterized in that** the casing is formed by applying injection-molded elastomeric material.

12. The control element as claimed in any of the preceding claims, **characterized in that** the housing (10) generally has the shape of a parallelepiped and the flow ducts (16) extend through the housing walls to a narrow side of the housing.

13. The control element as claimed in any of the preceding claims, **characterized in that** the operating arm (22) is adapted to be selectively coupled with
- a manual operating element (40),
- an electromagnet,
- a drive part of a pulse-operated electromagnetic drive,
- a piezoelectric drive element,
- a proportional drive,
- a fluid drive (80) with a piston and/or a diaphragm,
- a bimetallic drive (95),
- a drive with shape-remembering elements (90).

## Revendications

1. Elément de commande fluidique comportant un boîtier (10), une chambre de commande (12) formée dans le boîtier (10), dans laquelle débouchent au moins deux canaux d'écoulement (16), au moins un siège d'étanchéité (14) agencé dans la chambre de commande (12) et associé à l'un des canaux d'écoulement, et une languette (30) faisant saillie dans la chambre de commande (12) et entourée d'un matériau élastique, cette languette (30) étant déplaçable entre une position de fermeture dans laquelle elle couvre le siège d'étanchéité (14) et une position d'ouverture dans laquelle elle libère le siège d'étanchéité (14), la languette (30) formant un bras d'un levier à deux bras qui est monté à pivotement dans une enveloppe en matériau élastique enserrée dans le boîtier (10) et entourant étroitement le levier, et dont le deuxième bras fait saillie hors de la chambre de commande (12) pour servir de bras de d'actionnement (22), **caractérisé en ce que** pour le montage du levier, il est prévu deux paliers qui sont réalisés sous forme d'articulations rotatives agencées transversalement à la direction longitudinale du levier et opposées l'une à l'autre dans des parois de boîtier opposées, le levier présentant un bras porteur (20a) agencé transversalement à sa direction longitudinale, dont les extrémités extérieures également étroitement entourées par l'enveloppe sont montées dans le boîtier, dans les articulations rotatives formées par leur enveloppe.

2. Elément de commande selon la revendication 1, **caractérisé en ce que** les articulations rotatives sont enserrées chacune entre deux parties (10a, 10b) du boîtier.

3. Elément de commande selon la revendication 1 ou 2, **caractérisé en ce que** les extrémités reçues dans les articulations rotatives ont un profil de section transversale rectangulaire.

4. Élément de commande selon l'une quelconque des revendications précédentes, **caractérisé en ce que** les extrémités du bras porteur (20a) qui font saillie latéralement hors de l'enveloppe sont reliées de manière rigide au bras d'actionnement (22) par un tronçon de levier (20) en forme de fourche.

5. Élément de commande selon l'une quelconque des revendications précédentes, **caractérisé en ce que** l'enveloppe est réalisée d'une seule pièce avec un cadre étanche (26) entourant la chambre de commande (12) et dans le même matériau élastique, et le cadre étanche (26) est enserré entre les deux parties (10a, 10b) du boîtier (10).

6. Élément de commande selon l'une quelconque des revendications précédentes, **caractérisé en ce que** le boîtier (10) est constitué de deux parties de boîtier (10a, 10b) plates assemblées l'une à l'autre le long d'une ligne de séparation.

7. Élément de commande selon la revendication 6, **caractérisé en ce que** les parties de boîtier (10a, 10b) sont réalisées au moins approximativement identiques.

8. Élément de commande selon l'une quelconque des revendications précédentes, **caractérisé en ce que** deux sièges d'étanchéité (14) sont agencés dans la chambre de commande à l'opposé l'un de l'autre et chacun sur une partie de boîtier (10a, 10b).

9. Élément de commande selon l'une quelconque des revendications précédentes, **caractérisé en ce que** le levier présente entre son palier pivotant et le bras d'actionnement (22) un tronçon (34) qui est enfermé dans une chambre de pression (32) formée dans le boîtier, **en ce que** cette chambre de pression (32) est divisée en deux chambres de pression (32a, 32b) étanchées l'une vis-à-vis de l'autre par l'enveloppe du levier et **en ce qu'**au moins une des chambres de pression est reliée à l'un des canaux d'écoulement (16).

10. Elément de commande selon les revendications 8 et 9, **caractérisé en ce que** les canaux d'écoulement (17) associés aux sièges d'étanchéité (14) sont chacun reliés à la chambre de pression (32a, 32b) située sur le même côté.

11. Élément de commande selon l'une quelconque des revendications précédentes, **caractérisé en ce que** l'enveloppe est formée par un enrobage par extrusion d'un matériau élastomère.

12. Élément de commande selon l'une quelconque des revendications précédentes, **caractérisé en ce que** le boîtier (10) est réalisé d'une manière générale en forme de parallélépipède et les canaux d'écoulement (16) sont menés à travers les parois du boîtier vers un petit côté du boîtier.

13. Élément de commande selon l'une quelconque des revendications précédentes, **caractérisé en ce que** le bras d'actionnement (22) peut être accouplé sélectivement à
- un élément d'actionnement manuel (40),
- un électroaimant,
- un mécanisme d'entraînement électromagnétique à impulsions,
- un élément d'entraînement piézoélectrique,
- un entraînement proportionnel,
- un entraînement fluidique (89) avec piston et/ou membrane,
- un entraînement bimétallique (95),
- un entraînement avec éléments à effet mémoire (90).
